# EUROPEAN PATENT APPLICATION

(11) **EP 4 841 996 A1**
(43) Date of publication of application: **18.11.2026**
(21) Application number: 24916668.7
(22) Date of filing: 13.12.2024
(51) Int. Cl.: H04N 21/431, G06F 16/957, G06Q 30/0601

(54) **METHOD AND APPARATUS FOR PROCESSING OBJECT TO BE RECOMMENDED, DEVICE, AND STORAGE MEDIUM**

(30) Priority: 10.01.2024 CN 202410039386
(71) Applicant: BEIJING YOUZHUJU NETWORK TECHNOLOGY CO. LTD., Beijing 101299 (CN)
(72) Inventor: LIU, Mengmeng, Beijing 100028 (CN); WANG, Li, Beijing 100028 (CN)
(74) Representative: Marks & Clerk LLP
(86) International application number: PCT/CN2024/139375
(87) International publication number: WO 2025/148621

(57) **Abstract**

The disclosure provides a recommendation object processing method, an apparatus, a device, and a storage medium. The method includes: displaying a target page; in response to a live stream interface trigger operation acting on the target page, displaying a live stream interface page; and displaying a live stream object list on the live stream interface page, and presenting a target recommendation object or a first target live stream object at a preset preferred display position in the live stream object list. In the embodiments of the disclosure, when entering the live stream interface page from the target page that presents the target recommendation object, the target recommendation object or the first target live stream object is preferentially presented in the live stream object list on the live stream interface page, which enriches interaction manners related to recommendation objects in the live stream interface, thereby improving user experience.

## Description

The present application claims priority to Chinese Patent Application No. 202410039386.0, filed on January 10, 2024, and entitled "RECOMMENDATION OBJECT PROCESSING METHOD, APPARATUS, DEVICE AND STORAGE MEDIUM", which is hereby incorporated by reference in its entirety.

### FIELD

The present disclosure relates to the field of data processing, and in particular, to a recommendation object processing method, an apparatus, a device, and a storage medium.

### BACKGROUND

With the continuous development of network technology, requirements of users for live stream-related functions become more and more diversified. Therefore, how to enrich live stream-related functions to meet users' growing diversified requirements has become a technical problem to be solved.

### SUMMARY

To solve the above technical problem, embodiments of the present disclosure provide a recommendation object processing method, an apparatus, a device, and a storage medium.

In a first aspect, the present disclosure provides a recommendation object processing method. The method includes: displaying a target page, where the target page is used to present a target recommendation object; displaying, in response to a live stream interface trigger operation acting on the target page, a live stream interface page; and displaying a live stream object list on the live stream interface page, and presenting the target recommendation object or a first target live stream object at a preset preferred display position in the live stream object list, where the first target live stream object is determined from the live stream object list based on the target recommendation object.

In an optional implementation, the displaying a live stream object list on the live stream interface page includes: displaying, in response to an object list display trigger operation acting on the live stream interface page, the live stream object list on the live stream interface page.

In an optional implementation, before the displaying a live stream object list on the live stream interface page, the method further includes: displaying an information card of the target recommendation object on the live stream interface page, where object information of the target recommendation object is presented in the information card. Correspondingly, the displaying, in response to an object list display trigger operation acting on the live stream interface page, the live stream object list on the live stream interface page includes: in response to an object list display trigger operation acting on the information card of the target recommendation object, displaying the live stream object list on the live stream interface page.

In an optional implementation, the object information of the target recommendation object is presented in a first display area of the information card of the target recommendation object, and a first object list display control is provided in a second display area of the information card. The displaying, in response to an object list display trigger operation acting on the information card of the target recommendation object, the live stream object list on the live stream interface page includes: displaying, in response to a trigger on the first object list display control, the live stream object list on the live stream interface page.

In an optional implementation, the displaying, in response to an object list display trigger operation acting on the live stream interface page, the live stream object list on the live stream interface page includes: displaying, in response to a trigger on a second object list display control on the live stream interface page, the live stream object list on the live stream interface page.

In an optional implementation, the presenting the target recommendation object or the first target live stream object at the preset preferred display position in the live stream object list includes: if there is a second target live stream object in the live stream object list, presenting the target recommendation object or the first target live stream object at a display position adjacent to and after the second target live stream object in the live stream object list, where the second target live stream object is a live stream object in an explanation state; and if there is no second target live stream object in the live stream object list, presenting the target recommendation object or the first target live stream object at the top of the live stream object list.

In an optional implementation, after the displaying an information card of the target recommendation object on the live stream interface page, the method further includes: displaying, in response to a display hiding message of the information card of the target recommendation object, displaying an object explanation card on the live stream interface page, where the object explanation card is used to present object information of the live stream object in an explanation state.

In an optional implementation, before the displaying, in response to a display hiding message of the information card of the target recommendation object, an object explanation card on the live stream interface page, the method further includes: hiding, in response to a close trigger on the information card of the target recommendation object, the display of the information card; or hiding, in response to the display duration of the information card of the target recommendation object on the live stream interface page reaching a preset duration, the display of the information card.

In an optional implementation, the displaying a target page includes: displaying a video play page of a target video, where the target video has a preset correspondence with the target recommendation object; or displaying an object detail page of the target recommendation object, where object detail information of the target recommendation object is presented on the object detail page.

In a second aspect, the present disclosure further provides a recommendation object processing apparatus. The apparatus includes: a first display module, configured to display a target page, where the target page is used to present a target recommendation object; a second display module, configured to display a live stream interface page in response to a live stream interface trigger operation acting on the target page; and a third display module, configured to display a live stream object list on the live stream interface page, and present the target recommendation object or a first target live stream object at a preset preferred display position in the live stream object list, where the first target live stream object is determined from the live stream object list based on the target recommendation object.

In a third aspect, the present disclosure provides a computer-readable storage medium, where instructions are stored in the computer-readable storage medium, and the instructions, when executed by a terminal device, cause the terminal device to implement the above method.

In a fourth aspect, the present disclosure provides a recommendation object processing device, including: a memory, a processor, and a computer program stored in the memory and executable by the processor, where the processor, when executing the computer program, implements the above method.

In a fifth aspect, the present disclosure provides a computer program product, including a computer program/instruction, where the computer program/instruction, when executed by a processor, implements the above method.

### BRIEF DESCRIPTION OF THE DRAWINGS

The drawings herein, which are incorporated in and constitute a part of the specification, illustrate embodiments consistent with the present disclosure and, together with the specification, serve to explain the principles of the present disclosure.

To describe the technical solutions in the embodiments of the present disclosure or in the prior art more clearly, the drawings for describing the embodiments or the prior art will be briefly described below. Apparently, those of ordinary skill in the art may still derive other drawings from these drawings without creative efforts.
Fig. 1 is a flowchart of a method of recommendation object processing according to embodiments of the present disclosure;
Fig. 2 is a schematic diagram of a video play page of a target video according to embodiments of the present disclosure;
Fig. 3 is a schematic diagram of a live stream interface page according to embodiments of the present disclosure;
Fig. 4 is a schematic diagram of another live stream interface page according to an embodiment of the present disclosure;
Fig. 5 is a flowchart of another method of recommendation object processing according to embodiments of the present disclosure;
Fig. 6 is a schematic diagram of another live stream interface page according to embodiments of the present disclosure;
Fig. 7 is a schematic diagram of a structure of an apparatus for recommendation object processing according to embodiments of the present disclosure; and
Fig. 8 is a schematic diagram of a device for structure of a recommendation object processing according to embodiments of the present disclosure.

### DETAILED DESCRIPTION

To understand the above objects, features, and advantages of the present disclosure more clearly, the solutions of the present disclosure will be further described below. It should be noted that the embodiments of the present disclosure and the features in the embodiments may be combined with each other without conflict.

Many specific details are set forth in the following description to fully understand the present disclosure, but the present disclosure may also be implemented in other ways different from those described herein. Obviously, the embodiments in the specification are a part but not all of the embodiments of the present disclosure.

At present, a user is supported to enter a live stream interface page through a video play page or a commodity detail page, and then the user may browse live streaming commodities based on the live stream interface page. However, a switching process between the above two scenarios is relatively simple, and the interaction experience is poor. To this end, embodiments of the present disclosure provide a method of recommendation object processing. Specifically, a target page is displayed, where the target page is used to present a target recommendation object; a live stream interface page is displayed in response to a live stream interface trigger operation acting on the target page; and a live stream object list is displayed on the live stream interface page, and the target recommendation object or a first target live stream object is presented at a preset preferred display position in the live stream object list, where the first target live stream object is determined from the live stream object list based on the target recommendation object.

Compared with the prior art, the technical solutions provided by the embodiments of the present disclosure have at least the following advantages. The embodiment of the present disclosure provide a method of recommendation object processing. Specifically, a target page is displayed, where the target page is used to display a target recommendation object; a live stream interface page is displayed in response to a live stream interface trigger operation acting on the target page; and a live stream object list is displayed on the live stream interface page, and the target recommendation object or a first target live stream object is presented at a preset preferred display position in the live stream object list, where the first target live stream object is determined from the live stream object list based on the target recommendation object.

In the embodiment of the present disclosure, when entering the live stream interface page from the target page used to present the target recommendation object, the target recommendation object or the first target live stream object is preferentially presented in the live stream object list on the live stream interface page, which enriches interaction manners related to recommendation objects in the live stream interface, thereby improving user experience.

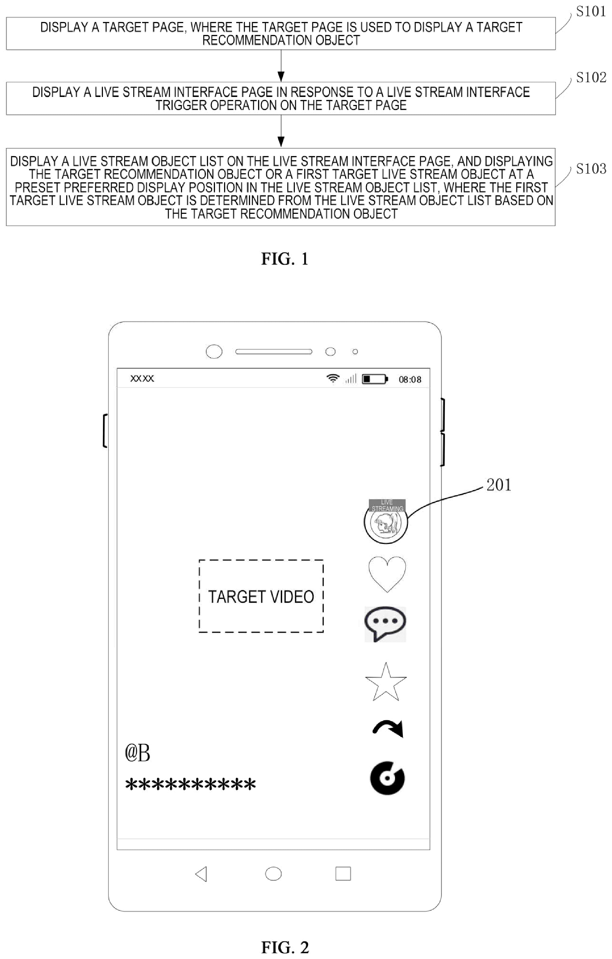

Specifically, embodiments of the present disclosure provide a method of recommendation object processing. Fig. 1 is a flowchart of a recommendation object processing method according to an embodiment of the present disclosure. The method specifically includes the following steps.

S101: displaying a target page, where the target page is used to display a present recommendation object. The method of recommendation object processing provided by the embodiment of the present disclosure may be applied to a client. Specifically, the client may be deployed on a terminal such as a smartphone, a tablet computer, or a desktop computer. In the embodiments of the present disclosure, the target page may be any display page, and the target recommendation object or related information of the target recommendation object is presentedon the target page. In an optional implementation, the target page may include a video play page of a target video, and the target video is bound to a target recommendation object. That is, the target video has a preset correspondence with the target recommendation object. In a process of playing the target video on the video play page, related information of the target recommendation object is presented. The target video is any video bound to a recommendation object. In another optional implementation, the target page may further include an object detail page of the target recommendation object. Object detail information of the target recommendation object is presented on the object detail page, for example, a commodity detail page of a certain commodity.

S102: displaying a live stream interface page in response to a live stream interface trigger operation acting on the target page. In the embodiments of the present disclosure, a live stream interface entrance is displayed on the target page. The live stream interface entrance is used to enter a live stream interface related to the target recommendation object. When a trigger on the live stream interface entrance is received, the live stream interface page is displayed. Fig. 2 is a schematic diagram of a video play page of a target video according to an embodiment of the present disclosure. The target video is played on the video play page, and related information of the target recommendation object (such as anchor information of the target recommendation object) and a live stream interface entrance 201 are presented in the process of playing the target video. When the trigger on the live stream interface entrance is received, the live stream interface page is displayed.

S103: displaying a live stream object list on the live stream interface page, and presenting the target recommendation object or a first target live stream object at a preset preferred display position in the live stream object list, where the first target live stream object is determined from the live stream object list based on the target recommendation object. In the embodiments of the present disclosure, the first target live stream object is a live stream object determined from the live stream object list based on features of the target recommendation object. The first target live stream object and the target recommendation object may have high similarity or some association. Specifically, the first target live stream object may be determined from the live stream object list based on information in at least one dimension, such as an image, text description information, style information, and brand information, of the target recommendation object.

In an optional implementation, if the live stream object list on the live stream interface page includes the target recommendation object, when the live stream object list is displayed on the live stream interface page, the target recommendation object is presented at the preset preferred display position in the live stream object list. When the target recommendation object is presented at the preset preferred display position in the live stream object list, an identification may further be set for the target recommendation object to prompt the user that the target recommendation object is a live stream object just saw. For example, a "just saw" label is set for the target recommendation object.

In another optional implementation, if the live stream object list on the live stream interface page does not include the target recommendation object, when the live stream object list is displayed on the live stream interface page, the first target live stream object is determined from the live stream object list based on the target recommendation object, and the first target live stream object is displayed at the preset preferred display position in the live stream object list.

In the embodiment of the present disclosure, the preset preferred display position is used to present the target recommendation object or the first target live stream object. That is, the target recommendation object or the first target live stream object is preferentially presented on the live stream object list. In addition, a live stream object in an explanation state on the live stream interface page may be preferentially presented at the top of the live stream object list.

Specifically, if there is a second target live stream object (that is, a live stream object in an explanation state) in the live stream object list, the target recommendation object or the first target live stream object is presented at a display position adjacent to and after the second target live stream object in the live stream object list (that is, second only to the live stream object in the explanation state). The second target live stream object is a live stream object in an explanation state. If there is no second target live stream object in the live stream object list, the target recommendation object or the first target live stream object is presented at the top of the live stream object list.

That is, when the live stream object list is displayed on the live stream interface page, if it is detected that there is currently a live stream object in an explanation state in the live stream object list, the target recommendation object or the first target live stream object is presented at a display position after a display position of the live stream object in the explanation state in the live stream object list. Otherwise, the target recommendation object or the first target live stream object is presented at the top of the live stream object list.

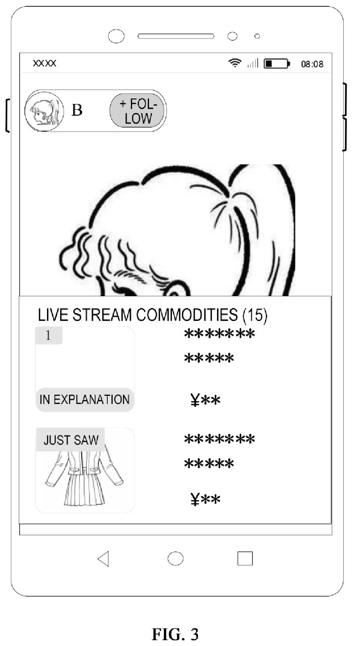

Fig. 3 is a schematic diagram of a live stream interface page according to embodiments of the present disclosure. A live stream object list is displayed on the live stream interface page, and a live stream object in an explanation state is presented at the first place in the live stream object list. The target recommendation object or the first target live stream object is displayed at a display position behind the first place, that is, at the second place.

In another optional implementation, if there is currently no second target live stream object (that is, a live stream object in an explanation state) in the live stream object list, the target recommendation object or the first target live stream object is presented at the top of the live stream object list.

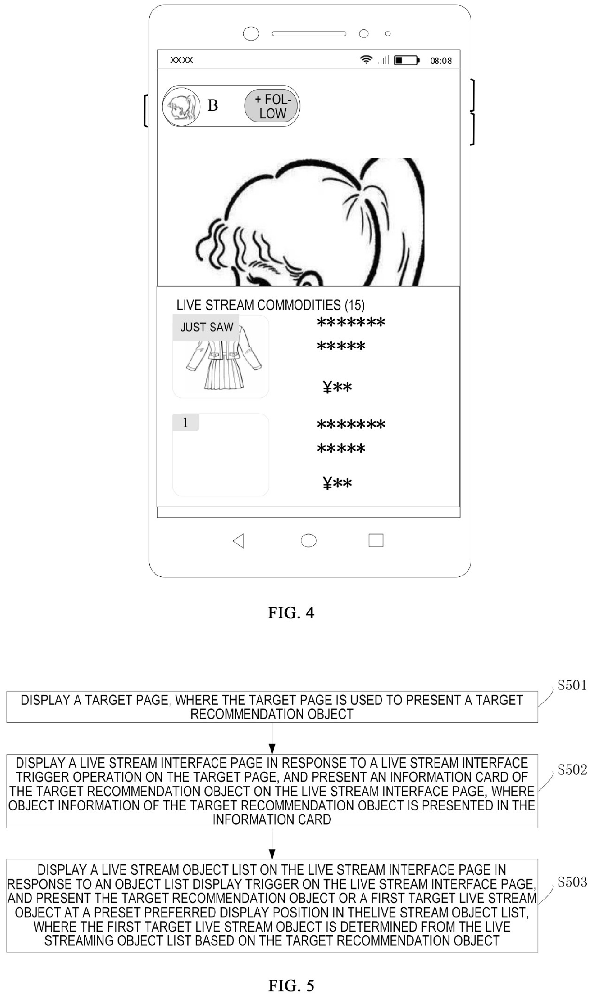

Fig. 4 is a schematic diagram of another live stream interface page according to embodiments of the present disclosure. There is currently no live stream object in an explanation state in a live stream object list displayed on the live stream interface page, and thus a target recommendation object or a first target live stream object is presented at the top of the live stream object list.

In an optional implementation, when a live stream interface trigger operation acting on a target page is received, a live stream interface page is displayed. At the same time, a live stream object list is directly displayed on the live stream interface page. At the same time, the target recommendation object or the first target live stream object is presented at a preset preferred display position in the live stream object list to undertake the presentation of the target recommendation object on the target page.

In the video play page of the target video shown above in Fig. 2, when a live stream interface entrance 201 is triggered, the live stream interface page is displayed. The live stream object list is displayed on the live stream interface page, as the live stream interface page shown above in Fig. 3. The target recommendation object or the first target live stream object is presented at the preset preferred display position in the live stream object list.

If it is detected that there is currently a live stream object in an explanation state in the live stream object list, the target recommendation object or the first target live stream object is presented at a display position after a display position of the live stream object in the explanation state in the live stream object list, as shown in the live stream interface page in Fig. 3. Otherwise, the target recommendation object or the first target live stream object is displayed at the top of the live stream object list, as shown in the live stream interface page in Fig. 4.

In the method of recommendation object processing provided by the embodiments of the present disclosure, a target page is displayed. The target page is used to display a target recommendation object. A live stream interface page is displayed in response to a live stream interface trigger operation acting on the target page. And a live stream object list is displayed on the live stream interface page, and the target recommendation object or a first target live stream object is presented at a preset preferred display position in the live stream object list, where the first target live stream object is determined from the live stream object list based on the target recommendation object.

In the embodiment of the present disclosure, when entering the live stream interface page from the target page used to present the target recommendation object, the target recommendation object or the first target live stream object is preferentially presented in the live stream object list on the live stream interface page, which enriches interaction manners related to recommendation objects in the live stream interface, thereby improving user experience.

In practical applications, when the live stream interface trigger operation acting on the target page is received, the live stream interface page is displayed. The live stream object list may further be triggered to be displayed on the live stream interface page through an interaction operation acting on the live stream interface page. Specifically, as shown in Fig. 5, which is a flowchart of another recommendation object processing method according to embodiments of the present disclosure. The method includes the following steps. S501: displaying a target page, where the target page is used to present a target recommendation object. The step S501 may be understood with reference to the content of the step S101, and details are not described herein again. S502: displaying a live stream interface page in response to a live stream interface trigger operation acting on the target page, and displaying an information card of the target recommendation object on the live stream interface page, where object information of the target recommendation object is presented in the information card.

In the embodiment of the present disclosure, a live stream interface entrance is displayed on the target page, and the live stream interface entrance is used for entering a live stream interface related to the target recommendation object. When a trigger on the live stream interface entrance is received, the live stream interface page is displayed, and the information card of the target recommendation object is presented on the live stream interface page. The object information of the target recommendation object is presented in the information card, that is, the object information of the target recommendation object is received in a form of the information card. The object information of the target recommendation object displayed in the information card may specifically include an image, price information, text description information, and the like of the target recommendation object.

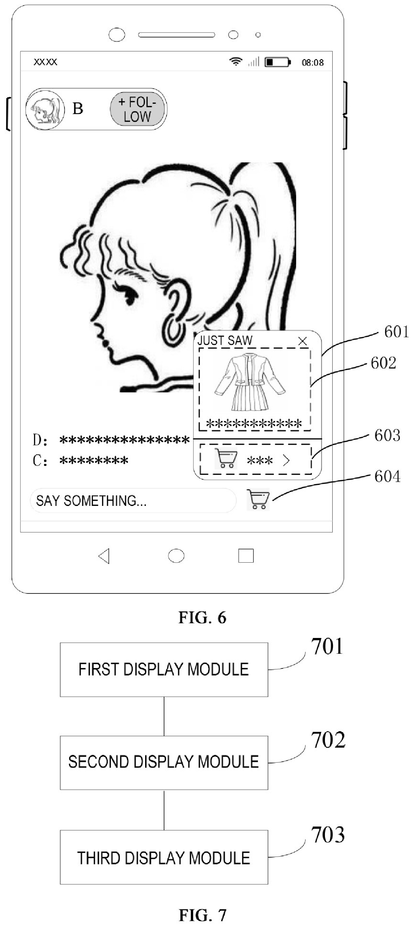

As shown in Fig. 6, which is a schematic diagram of a live stream interface page according to embodiments of the present disclosure. When a trigger on the live stream interface entrance 201 in the video play page shown in Fig. 2 is received, the live stream interface page is displayed, and an information card 601 of a target recommendation object is presented on the live stream interface page, where the information card 601 includes object information of the target recommendation object. In practical applications, an identification may further be set on the information card to prompt features of the target recommendation object. For example, a "just saw" label is used to prompt that the target recommendation object presented on the information card is a recommendation object just saw by the user, such as the "just saw" label on the information card on the live stream interface page shown above in Fig. 6.

S503: displaying a live stream object list on the live stream interface page in response to an object list display trigger operation acting on the live stream interface page, and presenting the target recommendation object or a first target live stream object at a preset preferred display position in the live stream object list, where the first target live stream object is determined from the live stream object list based on the target recommendation object.

In the embodiment of the present disclosure, the first target live stream object is a live stream object determined from the live stream object list based on features of the target recommendation object. The first target live stream object and the target recommendation object may have high similarity or some association. Specifically, the first target live stream object may be determined from the live stream object list based on information in at least one dimension, such as an image, text description information, style information, and brand information, of the target recommendation object.

In an optional implementation, if the live stream object list on the live stream interface page includes the target recommendation object, when the object list display trigger operation acting on the live stream interface page is received, the live stream object list is displayed on the live stream interface page, and the target recommendation object is presented at the preset preferred display position in the live stream object list. In addition, when the target recommendation object is presented at the preset preferred display position in the live stream object list, an identification may further be set for the target recommendation object to prompt the user that the target recommendation object is a live stream object just saw. For example, a "just saw" label is set for the target recommendation object.

In another optional implementation, if the live stream object list on the live stream interface page does not include the target recommendation object, when the object list display trigger operation acting on the live stream interface page is received, the first target live stream object is determined from the live stream object list based on the target recommendation object, and the live stream object list is displayed on the live stream interface page, and the first target live stream object is presented at the preset preferred display position in the live stream object list.

In the embodiment of the present disclosure, the preset preferred display position is used to present the target recommendation object or the first target live stream object, that is, the target recommendation object or the first target live stream object is preferentially presented on the live stream object list. In addition, a live stream object in an explanation state on the live stream interface page may be preferentially presented at the top of the live stream object list.

Specifically, if there is a second target live stream object (that is, a live stream object in an explanation state) in the live stream object list, the target recommendation object or the first target live stream object is presented at a display position adjacent to and after the second target live stream object in the live stream object list (that is, second only to the live stream object in the explanation state). The second target live stream object is a live stream object in an explanation state. If there is no second target live stream object in the live stream object list, the target recommendation object or the first target live stream object is presented at the top of the live stream object list.

That is, when the display of the live stream object list is triggered, if it is detected that there is currently a live stream object in the explanation state in the live stream object list, the target recommendation object or the first target live stream object is presented at the display position after the display position of the live stream object in the explanation state in the live stream object list. Otherwise, the target recommendation object or the first target live stream object is presented at the top of the live stream object list.

The live stream interface page is as shown in Fig. 3. In the live stream object list on the live stream interface page, the live stream object in the explanation state is presented at the first place, and the target recommendation object or the first target live stream object is presented at the display position after the first place, that is, at the second place.

Another live stream interface page is as shown in Fig. 4. There is no live stream object in the explanation state in the live stream object list on the live stream interface page, and thus the target recommendation object or the first target live stream object is displayed at the top of the live stream object list.

In the embodiment of the present disclosure, the object list display trigger operation acting on the live stream interface page may include a display trigger operation acting on the information card of the target recommendation object. Specifically, when the object list display trigger operation acting on the information card of the target recommendation object is received, the live stream object list is displayed on the live stream interface page, and the target recommendation object or the first target live stream object is presented at the preset preferred display position in the live stream object list.

In an optional implementation, the information card of the target recommendation object may be divided into two display areas, the object information of the target recommendation object is presented in a first display area of the information card of the target recommendation object, and a first object list display control is provided in a second display area of the information card.

The information card 601 of the target recommendation object in the live stream interface page shown in Fig. 6. The object information of the target recommendation object is presented in a first display area 602 of the information card, and the first object list display control is provided in a second display area 603 of the information card. Specifically, when a trigger on the first object list display control in the second display area of the information card of the target recommendation object is received, the live stream object list is displayed on the live stream interface page, and the target recommendation object or the first target live stream object is presented at the preset preferred display position in the live stream object list.

In addition, based on the above content, the first display area of the information card of the target recommendation object may also be set with corresponding interaction operations. Specifically, when a trigger on the first display area of the information card of the target recommendation object is received, an object detail page of the target recommendation object is displayed, where the object detail page is used to present object detail information of the target recommendation object.

In practical applications, in a process of displaying the information card of the target recommendation object on the live stream interface page, a second object list display control, specifically, for example, a "shopping cart" control, is also displayed on the live stream interface page. To be convenient for the user to quickly view the target recommendation object or the first target live stream object, so as to improve user interaction experience, in the embodiments of the present disclosure, when the second object list display control is triggered, the target recommendation object or the first target live stream object is preferentially displayed. As the second object list display control 604 on the live stream interface page shown in Fig. 6.

In another optional implementation, the object list display trigger operation acting on the live stream interface page may include triggering the second object list display control on the live stream interface page. Specifically, when the trigger on the second object list display control on the live stream interface page is received, the live stream object list is displayed on the live stream interface page. The target recommendation object or the first target live stream object is presented at the preset preferred display position in the live stream object list.

Based on the above content, after the information card of the target recommendation object displayed on the live stream interface page disappears, the object explanation card of the live stream object in the explanation state may further be presented on the live stream interface page. Specifically, when the display hiding message of the information card of the target recommendation object is received, if there is a live stream object in the explanation state on the current live stream interface page, the object explanation card is displayed on the live stream interface page. The object explanation card is used to present object information of the live stream object in the explanation state.

In an optional implementation, the display hiding message of the information card of the target recommendation object may include a close trigger on the information card of the target recommendation object. Specifically, when the close trigger on the information card of the target recommendation object is received, the display of the information card is hidden. If there is a live stream object in the explanation state on the current live stream interface page, the object explanation card is displayed on the live stream interface page. The close trigger on the information card of the target recommendation object may specifically be a trigger on a close control of the information card.

In another optional implementation, the display hiding message of the information card of the target recommendation object may include setting a preset duration for the display duration of the information card of the target recommendation object on the live stream interface page. Specifically, when it is monitored that the display duration of the information card of the target recommendation object on the live stream interface page reaches the preset duration, the display of the information card is hidden. If there is a live stream object in the explanation state on the current live stream interface page, the object explanation card is displayed on the live stream interface page.

Based on the above method embodiments, the present disclosure further provides an apparatus for recommendation object processing. Reference is made to Fig. 7, which is a schematic diagram of a structure of a recommendation object apparatus according to embodiments of the present disclosure. The apparatus includes: a first display module 701, configured to display a target page, where the target page is used to present a target recommendation object; a second display module 702, configured to display a live stream interface page in response to a live stream interface trigger operation acting on the target page; and a third display module 703, configured to display a live stream object list on the live stream interface page, and present the target recommendation object or a first target live stream object at a preset preferred display position in the live stream object list, where the first target live stream object is determined from the live stream object list based on the target recommendation object.

In an optional implementation, the apparatus further includes: a first display module, configured to display an information card of the target recommendation object on the live stream interface page, where object information of the target recommendation object is presented in the information card. Correspondingly, the third display module is specifically configured to display the live stream object list on the live stream interface page in response to an object list display trigger operation acting on the live stream interface page.

In an optional implementation, the third display module is specifically configured to display the live stream object list on the live stream interface page in response to an object list display trigger operation acting on the information card of the target recommendation object.

In an optional implementation, the object information of the target recommendation object is presented in a first display area of the information card of the target recommendation object, and a first object list display control is provided in a second display area of the information card. The third display module is specifically configured to display the live stream object list on the live stream interface page in response to a trigger on the first object list display control.

In an optional implementation, the third display module is specifically configured to display the live stream object list on the live stream interface page in response to a trigger on a second object list display control on the live stream interface page.

In an optional implementation, the third display module includes a first display sub-module, including: a second display sub-module, configured to, when there is a second target live stream object in the live stream object list, present the target recommendation object or the first target live stream object at a display position adjacent to and after the second target live stream object in the live stream object list, where the second target live stream object is a live stream object in an explanation state; and a third display sub-module, configured to, when there is no second target live stream object in the live stream object list, present the target recommendation object or the first target live stream object at the top of the live stream object list.

In an optional implementation, the apparatus further includes: a fourth display module, configured to display an object explanation card on the live stream interface page in response to a display hiding message of the information card of the target recommendation object, where the object explanation card is used to present object information of a live stream object in an explanation state.

In an optional implementation, the apparatus further includes: a first hiding module, configured to hide the display of the information card in response to a close trigger on the information card of the target recommendation object; and a second hiding module, configured to hide the display of the information card in response to the display duration of the information card of the target recommendation object on the live stream interface page reaching a preset duration.

In an optional implementation, the first display module includes: a first display sub-module, configured to display a video play page of a target video, where the target video has a preset correspondence with the target recommendation object; and a second display sub-module, configured to display an object detail page of the target recommendation object, where object detail information of the target recommendation object is presented on the object detail page.

In the apparatus for recommendation object processing provided by the embodiments of the present disclosure, a target page is displayed, where the target page is used to present a target recommendation object. A live stream interface page is displayed in response to a live stream interface trigger operation acting on the target page. And a live stream object list is displayed on the live stream interface page, and the target recommendation object or a first target live stream object is presented at a preset preferred display position in the live stream object list, where the first target live stream object is determined from the live stream object list based on the target recommendation object.

In the embodiments of the present disclosure, when entering the live stream interface page from the target page used to present the target recommendation object, the target recommendation object or the first target live stream object is preferentially presented in the live stream object list on the live stream interface page, which enriches interaction manners related to recommendation objects in the live stream interface, thereby improving user experience.

In addition to the above methods and apparatuses, embodiments of the present disclosure further provide a computer-readable storage medium, where instructions are stored in the computer-readable storage medium, and the instructions, when executed by a terminal device, cause the terminal device to implement the method of recommendation object processing according to the embodiments of the present disclosure.

Embodiments of the present disclosure further provide a computer program product, including a computer program/instruction, where the computer program/instruction, when executed by a processor, implements the method of recommendation object processing according to the embodiment of the present disclosure.

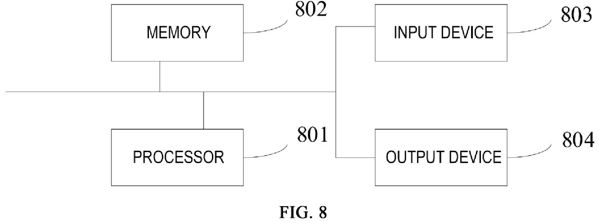

In addition, embodiments of the present disclosure further provide a device for recommendation object processing, which, as shown in Fig. 8, may include: a processor 801, a memory 802, an input device 803, and an output device 804. The number of processors 801 in the recommendation object processing device may be one or more, and one processor is used as an example in Fig. 8. In some embodiments of the present disclosure, the processor 801, the memory 802, the input device 803, and the output device 804 may be connected through a bus or in other ways. In Fig. 8, connection through a bus is used as an example.

The memory 802 may be used to store software programs and modules, and the processor 801 executes various functional applications and data processing of the recommendation object processing device by running the software programs and modules stored in the memory 802. The memory 802 may mainly include a program storage area and a data storage area. The program storage area may store an operating system, an application program required by at least one function, and the like. In addition, the memory 802 may include a high-speed random access memory or a non-volatile memory, such as at least one magnetic disk storage device, a flash memory device, or other volatile solid-state storage devices. The input device 803 may be used to receive input digital or character information, and generate a signal input related to user settings and function control of the recommendation object processing device.

Specifically, in this embodiment, the processor 801 will load an executable file corresponding to a process of one or more application programs into the memory 802 according to the following instructions, and the processor 801 will run the application programs stored in the memory 802 to implement the various functions of the above recommendation object processing device.

It should be noted that in this paper, relational terms such as "first" and "second" are only used to distinguish one entity or operation from another entity or operation, and do not necessarily require or imply any actual relationship or order between these entities or operations. Moreover, terms "include", "comprise", or any other variant thereof are intended to cover non-exclusive inclusion, so that a process, method, object, or device including a series of elements includes not only those elements, but also other elements not explicitly listed or elements inherent to such process, method, object, or device. Without further restrictions, an element defined by a phrase "including a..." does not exclude that there are other identical elements in the process, method, object, or device including the element.

The above descriptions are only specific implementations of the present disclosure, so that those skilled in the art may understand or implement the present disclosure. Various modifications to these embodiments will be apparent to those skilled in the art, and general principles defined herein may be implemented in other embodiments without departing from the spirit or scope of the present disclosure. Therefore, the present disclosure will not be limited to these embodiments described herein, but rather to the widest scope consistent with the principles and novel features disclosed herein.

## Claims

1. A recommendation object processing method, comprising:
displaying a target page, wherein the target page is used to present a target recommendation object;
displaying, in response to a live stream interface trigger operation acting on the target page, a live stream interface page; and
displaying a live stream object list on the live stream interface page, and presenting the target recommendation object or a first target live stream object at a preset preferred display position in the live stream object list, wherein the first target live stream object is determined from the live stream object list based on the target recommendation object.

2. The method of claim 1, wherein the displaying a live stream object list on the live stream interface page comprises:
displaying, in response to an object list display trigger operation acting on the live stream interface page, the live stream object list on the live stream interface page.

3. The method of claim 2, wherein before the displaying a live stream object list on the live stream interface page, the method further comprises:
presenting an information card of the target recommendation object on the live stream interface page, wherein object information of the target recommendation object is presented in the information card; and
correspondingly, the displaying, in response to an object list display trigger operation acting on the live stream interface page, the live stream object list on the live stream interface page comprises:
displaying, in response to an object list display trigger operation acting on the information card of the target recommendation object, the live stream object list on the live stream interface page.

4. The method of claim 3, wherein the object information of the target recommendation object is presented in a first display area of the information card of the target recommendation object, and a first object list display control is provided in a second display area of the information card; and the displaying, in response to an object list display trigger operation acting on the information card of the target recommendation object, the live stream object list on the live stream interface page comprises:
displaying, in response to a trigger operation on the first object list display control, the live stream object list on the live stream interface page.

5. The method of claim 2, wherein the displaying, in response to an object list display trigger operation acting on the live stream interface page, displaying the live stream object list on the live stream interface page comprises:
displaying, in response to a trigger operation on a second object list display control on the live stream interface page, the live stream object list on the live stream interface page.

6. The method of claim 1, wherein the presenting the target recommendation object or the first target live stream object at a preset preferred display position in the live stream object list comprises:
if there is a second target live stream object in the live stream object list, presenting the target recommendation object or the first target live stream object at a display position adjacent to and following the second target live stream object in the live stream object list, wherein the second target live stream object is a live stream object in an explanation state; and
if there is an absence of a second target live stream object in the live stream object list, presenting the target recommendation object or the first target live stream object at the top of the live stream object list.

7. The method of claim 3, wherein after the displaying an information card of the target recommendation object on the live stream interface page, the method further comprises:
displaying, in response to a display hiding message for the information card of the target recommendation object, an object explanation card on the live stream interface page, wherein the object explanation card is used to present object information of the live stream object in an explanation state.

8. The method of claim 7, wherein before the displaying, in response to a display hidding message for the information card of the target recommendation object, an object explanation card on the live stream interface page, the method further comprises:
hiding, in response to a close trigger on the information card of the target recommendation object, the display of the information card;
or
hiding, in response to the display duration of the information card of the target recommendation object on the live stream interface page reaching a preset duration, the display of the information card.

9. The method of claim 1, wherein the displaying a target page comprises:
displaying a video play page of a target video, wherein the target video has a preset correspondence with the target recommendation object;
or
displaying an object detail page of the target recommendation object, wherein object detail information of the target recommendation object is presented on the object detail page.

10. A recommendation object processing apparatus, comprising:
a first display module configured to display a target page, wherein the target page is used to present a target recommendation object;
a second display module configured to display a live stream interface page in response to a live stream interface trigger operation acting on the target page; and
a third display module configured to display a live stream object list on the live stream interface page, and present the target recommendation object or a first target live stream object at a preset preferred display position in the live stream object list, wherein the first target live stream object is determined from the live stream object list based on the target recommendation object.

11. A computer-readable storage medium storing instructions therein, the instructions, when running on a terminal device, cause the terminal device to implement the method of any of claims 1 to 9.

12. A recommendation object processing device, comprising: a memory, a processor, and a computer program stored in the memory and runnable on the processor, the processor, when executing the computer program, implementing the method of any of claims 1 to 9.
